# EUROPEAN PATENT APPLICATION

(11) **EP 4 729 641 A1**
(43) Date of publication of application: **22.04.2026**
(21) Application number: 25184133.4
(22) Date of filing: 20.06.2025
(51) Int. Cl.: C21D 9/52, B60C 9/00, C22C 38/02, C22C 38/04, D07B 1/06

(54) **STEEL WIRE CONTAINING A HIGH CONTENT OF RECYCLED STEEL FOR RUBBER REINFORCEMENT**

(71) Applicant: NV Bekaert SA, 8550 Zwevegem (BE)
(72) Inventor: ISSELEE, Heiko, 8550 Zwevegem (BE); JOSHI, Chidambar, 8550 Zwevegem (BE)
(74) Representative: Serwas, Harry

(57) **Abstract**

The invention provides a steel wire containing a high content of recycled steel for rubber reinforcement, the steel wire has a very high tensile strength TS of at least 4200-2000xd MPa, and steel wire contains at least 70% recycled steel.

## Description

### Technical Field

The invention relates to a steel wire containing a high content of recycled steel for rubber reinforcement. The invention also relates to a steel cord comprising the steel wires containing a high content of recycled steel. The invention further relates to a tire reinforced by the steel cords comprising steel wires containing a high content of recycled steel.

### Background Art

Steel cords, which consist of steel wires, are widely used as a reinforcement for rubber products, such as conveyor belt, tire, hose etc. As a reinforcement for rubber products, the steel cord is required to have a certain strength. The strength of the steel cord depends on the strength of the steel wires and the cord construction. Steel wire for steel cord for rubber reinforcement normally has a carbon content of at least 0.60% wt%, and it is made by drawing a wire rod with a big diameter of 5-8mm until a fine diameter of 0.15-0.55mm. The strength of the steel wire mostly depends on the steel composition and the wire making method, especially the steel composition. The composition of the steel wire rod for making the steel wire for rubber reinforcement is strictly regulated, including the content of carbon, manganese, silicon, chromium, nitrogen and etc. The strict regulations on the steel composition ensure that the steel wire rod is suitable for a series of drawing steps with less wire breaking, and that the steel wire made thereof has a desired strength and ductility. The high-quality steel wire rod requires high grade steel, i.e., less impurities, and advanced manufacturing method technology.

Recently the reduction of carbon emissions has become more and more important. As thus the use of scrap steel to make steel wire rods for rubber reinforcement is adopted more and more, for example, the steel wire rods are made from steel raw material that comprises at least 50% scrap steel. WO23110810 discloses a steel wire for rubber reinforcement, the steel wire is made of a wire rod comprising at least 70% recycled steel. The steel wire has a composition comprising carbon of 0.1%-1.1%, manganese of 0-0.6%, silicon of 0-1%, chromium of 0-1%, nitrogen of 70 ppm-120 ppm, and the contents of Cu, Mo, Ni, Sn, Al, P and S each being less than 1%, the rest is iron and impurities. Due to the high content of recycled steel of the raw material, the wire rod is made by electric arc furnace (EAF). WO24190796 discloses a steel wire for rubber reinforcement, the steel wire is made of a wire rod that is made from a steel raw material containing 100% recycled steel.

However, according to the current strict regulations on wire rods for steel wires for rubber reinforcement, the cost of manufacturing steel wires from wire rods with a high recycled steel content is still too high.

### Disclosure of Invention

The invention provides a steel wire containing a high content of recycled steel for rubber reinforcement.

The invention provides a steel cord comprising steel wires containing a high content of recycled steel.

The invention provides a tire reinforced by steel cords comprising steel wires containing a high content of recycled steel.

According to the first aspect of the invention, a steel wire is provided, the steel wire containing at least 50% recycled steel, the steel wire has a composition comprising 0.60%-1.10% carbon, 0.10%-0.50% silicon, 0.50%-0.80% manganese, 0-0.05% phosphorus, 0-0.03% sulphur, 0-0.50% chromium, 0-0.50% nickel, 0-0.20% molybdenum, 0-0.50% copper, 0-0.01% aluminum, 0-120ppm nitrogen, the rest is iron and inevitable impurities. All the percentages are weight percentages wt%.

According to the invention, 'the steel wire containing at least 50% recycled steel' means that a steel wire made from a wire rod which is made from a steel material containing at least 50% wt% recycled steel or steel scrap. Since the steel material for making the wire rod contains at least 50% recycled steel, the wire rod made from such steel material is deemed to contain at least 50% recycled steel, and the steel wire made from such wire rod is deemed to contain at least 50% recycled steel.

The steel material for making the wire rod contains at least 50% recycled steel, or for example at least 70% recycled steel, or at least 90% recycled steel, or at least 97% recycled steel or even 100% recycled steel. With the higher content of recycled steel, at least one or even all of the tramp elements of chromium, nickel, molybdenum, copper and nitrogen in the wire rod become higher, for example the content of chromium is 0.20%-0.50%, the content of nickel is 0.25%-0.50%, the content of molybdenum is 0.10%-0.20%, the content of copper is 0.30%-0.50%, or the content of nitrogen is 80ppm-100ppm. Correspondingly the steel wire made from the wire rod has the same composition comprising at least one or even all higher tramp elements, i.e., 0.20%-0.50% chromium, 0.25%-0.50% nickel, 0.10%-0.20% molybdenum, 0.30%-0.50% copper, or 80ppm-100ppm nitrogen. By using a process that reduces or removes tramp elements, the content of those tramp elements in the wire rod can be reduced to be 0-0.15% chromium, 0-0.20% nickel, 0-0.05% molybdenum, 0-0.25% copper or 0-80ppm nitrogen. Correspondingly the steel wire made from the wire rod has the same composition comprising at least one or even all reduced tramp elements, 0-0.15% chromium, 0-0.20% nickel, 0-0.05% molybdenum, 0-0.25% copper or 0-80ppm nitrogen. In some embodiments, the content of nitrogen is less than 80ppm, or less than 70ppm, or less than 60ppm, or less than 50ppm, or less than 40ppm, such as 10-30ppm.

The tramp elements can be reduced or removed by the existing methods, for example, mechanical separation method to remove copper wires and coatings from the scraps before they are remelted, chemical or electrochemical methods to remove specific elements, or melt process such as electrorefining and slag melting.

Electric arc furnace ('EAF') process is a steelmaking process using electrical currents to melt scrap steel and other recycled metals. It's more energy efficient while allowing for increased flexibility in the steelmaking process. The invention steel wire is preferably made from a wire rod made by EAF process. Alternatively, the invention steel wire can also be made from a wire rod made by blast oxygen furnace ('BOF') process.

The steel material as raw material for making the wire rod contains at least 50% recycled steel. The recycled steel is the scrap steel. The scrap steel may come from various steel products which have already been used and scrapped, for example the steel products in automotive industry, construction and mining industry and energy industry, such as steel spring, steel fiber, steel pipe, steel plate, steel cable, lifting cord or rope, tire cord, tire bead wire, hose wire, conveyor belt cord and etc.. The steel material for making the steel wire may contain the steel that has been recycled for one, or two or more times. Preferably, the source of scrap is selected according to its degree of purity, to avoid too many tramp elements. One reference is the article 'Steel scrap generation in the EU-28 since 1946 - Sources and composition', Volume 173 of Conservation and Recycling, published on October 2021, this article describes the selection of source of steel scrap.

The wire rod for making the invention steel wire may contain non-recycled steel, and 'non-recycled steel' means the steel is direct reduced iron, hot briquetted iron or pig iron. This means the steel material for making the wire rod may contain non-recycled steel. However, the content of non-recycled steel is not high, less than 50%, preferably less than 30%, or more preferably less than 10%, or most preferably less than 3%, or even 0%. As thus the invention steel wire may contain non-recycled steel of less than 50%, or less than 30%, or less than 10%, or less than 3%, or even 0%.

In a preferably embodiment, the wire rod for making the invention steel wire doesn't contain non-recycled steel, this means that all the steel used to make the wire rod come from scrap steel. The wire rod contains the recycled steel of at least 97% or even 100%.

The steel wire may have a coating on the steel substrate. The coating could be a metal coating. A metal coating may comprise one, two or more metals selected from the group of copper, zinc, cobalt, nickel, tin, indium, titanium, manganese, iron, silver, bismuth and molybdenum. For example, the metal coating could be zinc coating, brass coating, bronze coating, zinc-copper-cobalt coating, zinc-copper-iron coating, zinc-silver coating or zinc-tin-silver coating, zinc-cobalt-silver coating, zinc-copper-silver coating. The steel wire may have a second or more coatings upon the metal coating. For example, a polymer coating could be the second coating upon the metal coating. The polymer coating could be made of thermoplastic polymer, thermoset polymer, or their composite. The examples could be a coating of coumarone resin, petroleum resin, terpene resin, bitumen, rosin, melamine-formaldehyde resin, epoxy resin, organic silicone resin, polyester resin, furan resin, polyurethane resin, phenolic resin, urea formaldehyde resin, vinyl esters, bismaleimide resin, polyimide, cyanate ester or polybutadiene resin. One example is the steel wire has a metal coating of bronze on the steel substrate and a coumarone resin coating on the bronze coating. There may be one or more additives added in the polymer for better adhering performance, such as sulfur added in the coumarone resin coating on the bronze coating on the steel substrate of the steel wire.

The steel wire has a tensile strength ('TS') of normal tensile (NT), high tensile (HT), super high tensile (ST), ultra-high tensile (UT), mega tensile (MT), giga tensile (GT) or even higher. ST means the tensile strength (TS) of the steel wire satisfies: 3800-2000xd≤TS<4200-2000xd MPa, d being the steel wire diameter in mm. UT means the tensile strength (TS) of the steel wire satisfies: 4200-2000xd≤TS<4600-2000xd MPa. MT means the tensile strength (TS) of the steel wire satisfies: 4600-2000xd≤TS≤5000-2000xd MPa. Preferably the steel wire has a tensile strength of UT or MT or even higher like GT, for making a lighter tire with advantages such as lower rolling resistance and energy saving for carbon emissions reduction.

Accordingly, the steel wire with a tensile strength TS of UT or MT has a carbon content of 0.70%-1.00%, or preferably 0.80%-0.95%, or more preferably 0.85%-0.95%, while the other components of the steel wire are 0.10%-0.50% silicon, 0.50%-0.80% manganese, 0-0.05% phosphorus, 0-0.03% sulphur, 0-0.50% chromium, 0-0.50% nickel, 0-0.20% molybdenum, 0-0.50% copper, 0-0.01% aluminum, 0-120ppm nitrogen, the rest is iron and inevitable impurities.

Alternatively, the steel wire for rubber reinforcement may have a relatively low carbon content, for example, less than 0.60%, or less than 0.40% or even less than 0.20% such as 0.10%-0.15%. The low carbon steel wire may contain at least 50% recycled steel, or for example at least 70% recycled steel, or at least 90% recycled steel, or at least 97% recycled steel or even 100% recycled steel. The low carbon steel wire may be used as bead wire or bead cable to reinforce the bead of the tire.

The steel wire can be used as monofilament as a reinforcement for rubber articles. Alternatively, two or more steel wires can be twisted thereby to form a steel cord as a reinforcement for rubber articles.

The steel cord, made by twisting the invention steel wires or twisting at least one invention steel wire and at least one conventional steel wire, is provided according to one of the objects of the invention.

The steel cord may have a construction known in the field. The invention is appliable to any of the known steel cords in the field.
1) Multi-strands steel cord with a construction of nm., n being the number of the strand and being at least two, m being the number of the steel wire of each strand and being at least two, examples are 3x2, 3x3, 3x4, 3x6, 3x7, 4x2, 4x3, 4x4, 4x7, 7x7, 7x7+1, 7x(3+9), 7x(3+9)+1, 7x(1+18), 7x(1+18)+1, 7x(3+9+15), 7x(3+9+15)+1;
2) Single strand steel cord with a construction of 1xn, such steel cord has at least two steel wires which have been twisted together, examples are 1x2, 1x3, 1x4, 1x5, 1x6, 1x7, 1x8;
3) Steel cord with a construction of name, such steel cord comprising two groups of steel wires. The two groups are twisted around each other and form helicoids of a same pitch, the first group has n steel wires, n being at least two, the n steel wires being substantially untwisted and parallel to each other; the second group has m steel wires, m being at least one, examples are 2+1, 2+2, 2+3, 2+4, 3+2, 3+3, 3+4, 4+3, 4+6;
4) Layered constructions lama(+n), such steel cord comprises a core having I steel wires, a first layer having m steel wires, and possibly a second layer having n steel wires, examples are 1+3, 1+4, 1+5, 1+6, 2+5, 2+5cc, 2+6, 2+7, 2+7+1, 2+7cc, 2+8, 3+6, 3+8, 3+8cc, 3+9, 3+9+1, 3+9cc, 3+9+1cc (3/9+1), 4+9, 4+10, 1+3+8, 1+4+8cc, 1+4+9, 1+5+10, 1+5+10cc, 1+6+11, 1+6+12, 1+6+12cc, 2+5+10, 2+6+12, 3+8+13, 3+8+13+1, 3+9+15, 3+9+15+1, 4+10+16 or 4+10+16+1.

The steel cord may comprise one wrapping steel wire around its main cord construction. One example is 3+9+15+1, the main cord construction is 3+9+15, and the last number of '1' means the wrapping steel wire.

The invention steel cord comprises two or more steel wires, at least one of the steel wires is the invention steel wire which contains at least 50% recycled steel, or at least 70% recycled steel, or at least 90% recycled steel, or at least 97% recycled steel or even 100% recycled steel. Besides the invention steel wire, the invention steel cord may comprise at least one conventional steel wire, and 'conventional steel wire' means the steel wire containing recycled steel of less than 50%, or less than 30%, or less than 10%, or less than 3% or even 0%. One example is, the steel cord has a wrapping steel wire containing at least 50% recycled steel, or at least 70% recycled steel, or at least 90% recycled steel, or at least 97% recycled steel or even 100% recycled steel, while each of the remaining steel wires of the steel cord contains recycled steel of less than 50%, or less than 30%, or less than 10%, or less than 3%, or even 0%. One preferable example is, the steel cord has a wrapping steel wire containing recycled steel of less than 50%, or less than 30%, or less than 10%, or less than 3%, or even 0%, while each of the remaining steel wires of the steel cord contains at least 50% recycled steel, or at least 70% recycled steel, or at least 90% recycled steel, or at least 97% recycled steel or even 100% recycled steel.

The rubber article reinforced by invention steel wires or invention steel cords may be rubber hose, conveyor belt, rubber tire such as motorcycle tire, bicycle tire, utility vehicle tire, truck tire, bus tire, passenger car tire, OTR tire and etc..

A tire reinforced by invention steel cords and/or steel wires is provided. The tire may be any type of tire known in the field, that the tire for passenger car, the tire for truck, the tire for bus, the tire for heavy vehicle, the tire for aircraft, the tire for motorcycle, the tire for bicycle, the tire for utility vehicle and etc.

In a preferably embodiment, the tire comprises at least one belt layer, at least one carcass layer, at least one tread layer and a pair of bead portions, where the belt layer, the carcass layer, the tread layer and/or the bead portions comprises the invention steel wires and/or invention steel cords. One example is the tire comprises two or more belt layers, each of the belt layers is reinforced by invention steel cords. Alternatively, the tire comprises two or more belt layers, at least one belt layer is reinforced by invention steel wires or invention steel cords, and at least one belt layer is reinforced by conventional steel wires or conventional steel cords. Such a mix of invention steel wires or steel cords containing high content of recycled steel and conventional steel wires or steel cords with low or zero content of recycled steel can also be used for carcass or the tread of the tire.

The steel wire may be wound as a bundle for reinforcing the bead of the tire, or the steel wires may be twisted into a cable for reinforcing the bead of the tire, such as cable bead.

### Mode(s) for Carrying Out the Invention

The invention steel wire is made from a wire rod. The wire rod is made from steel material containing at least 50%, or at least 70%, or at least 90%, or at least 97% or even 100% recycled steel, as thus the steel wire contains recycled steel of at least 50%, or at least 70%, or at least 90%, or at least 97% or even 100%, in the process of EAF.

The wire rod has a composition comprising 0.60%-1.10% carbon, 0.10%-0.50% silicon, 0.50%-0.80% manganese, 0-0.05% phosphorus, 0-0.03% sulphur, 0-0.50% chromium, 0-0.50% nickel, 0-0.20% molybdenum, 0-0.50% copper, 0-0.01% aluminum, 0-120ppm nitrogen, the rest is iron and inevitable impurities.

The wire rod is firstly cleaned by mechanical descaling and / or by chemical pickling in a H₂SO₄ or HCl solution in order to remove the oxides present on the surface. The wire rod is then rinsed in water and is dried. The dried wire rod is then subjected to a series of dry drawing operations in order to reduce the diameter until an intermediate diameter.

At this intermediate diameter, e.g. at about 3.0 to 3.5 mm, the dry drawn steel wire is subjected to an intermediate heat treatment, called patenting. Patenting means first austenitizing until a temperature of about 1000°C followed by a transformation phase from austenite to pearlite at a temperature of about 600 - 650°C. The steel wire is then ready for further mechanical deformation.

Thereafter the steel wire is further dry drawn from the intermediate diameter until a first diameter in a number of diameter reduction steps. The first diameter typically ranges from 0.8 mm to 3.0 mm. Examples of wire diameters are 0.89 mm, 0.90 mm, 0.96 mm, 1.00 mm, 1.20 mm, 1.26 mm, 1.30 mm, 1.42 mm, 1.55 mm, 1.60 mm, 1.65 mm, 1.83 mm, 2.00 mm, 2.03 mm, 2.20 mm, 2.53mm, 2.83mm, 3.0mm.

The steel wire with the first diameter of 0.8 mm to 3.0 mm can be used as bead wire for reinforcing the bead of the tire. For this purpose, the steel wire with the first diameter is provided with a metal coating such as the coating of zinc, brass, bronze or zinc-tin-silver, and then a polymer coating upon the metal coating such as the coating of coumarone resin, petroleum resin, terpene resin, bitumen, rosin, melamine-formaldehyde resin, epoxy resin, organic silicone resin, polyester resin, furan resin, polyurethane resin, phenolic resin, urea formaldehyde resin, vinyl esters, bismaleimide resin, polyimide, cyanate ester or polybutadiene resin. Alternative the steel wire is not coated with any metal coating, in other words, it is a bright bead wire. In some embodiments, the steel wire for reinforcing the bead of the tire may have a diameter up to 5.00mm, for mild steel cable bead.

Alternatively, the steel wire can be further drawn to be finer for reinforcing the belt layer, carcass layer, or the tread layer of the tire. At this first diameter, the steel wire is subjected to another patenting treatment, i.e. austenitizing again at a temperature of about 1000°C and thereafter quenching at a temperature of 600 to 650°C to allow for transformation to pearlite.

After this patenting treatment, the steel wire is usually provided with a metal coating. A thermos-diffusion treatment is applied to form the metal coating. A metal coating may comprise one, two or more metal selected from the group of copper, zinc, cobalt, nickel, tin, indium, titanium, manganese, iron, silver, bismuth and molybdenum. For example, the metal coating could be zinc coating, brass coating, zinc-copper-cobalt coating, zinc-copper-iron coating, zinc-silver coating, zinc-cobalt-silver coating or zinc-copper-silver coating.

The metal coated steel wire is then subjected to a final series of cross-section reductions by means of wet drawing machines until a second diameter. Wet drawing process includes a series of drawing passes by various drawing dies.

Steel wires adapted for the reinforcement of tires typically have a second diameter preferably ranging from 0.15 mm to 0.55 mm. Examples of wire diameters are 0.16 mm, 0.175 mm, 0.18 mm, 0.20 mm, 0.22 mm, 0.245 mm, 0.28 mm, 0.30 mm, 0.32 mm, 0.35 mm, 0.38 mm, 0.40 mm, 0.45 mm.

The final steel wire has a carbon content of 0.60%-1.10% percent by weight, or preferably 0.70%-1.00%, or more preferably 0.80%-0.95%.

The final steel wire has a tensile strength TS of normal tensile (NT), high tensile (HT), super high tensile (ST), ultra-high tensile (UT) or now mega tensile (MT). ST means the tensile strength (TS) of the steel wire satisfies: 3800-2000xd≤TS<4200-2000xd MPa. UT means the tensile strength (TS) of the steel wire satisfies: 4200-2000xd≤TS<4600-2000xd MPa. MT means the tensile strength (TS) of the steel wire satisfies: 4600-2000xd≤TS≤5000-2000xd MPa.

Two or more steel wires are twisted by the existing steel cord producing process, i.e. cabling or bunching process, thereby forming a steel cord. The steel cord may have a cord lay length of 4-40 mm, preferably 6-38mm.

With the use of high content of recycled steel, the carbon emission from the production of invention steel wire or the invention steel cord is significantly reduced.

## Claims

1. A steel wire for tire reinforcement, said steel wire has a tensile strength TS of at 4200-2000xd MPa, d being the steel wire diameter in mm, said steel wire contains at least 70% recycled steel.

2. A steel wire according to claim 1, **characterized in that** said steel wire contains at least 90% recycled steel.

3. A steel wire according to claim 1 or 2, **characterized in that** said steel wire has a composition comprising 0.60%-1.10% carbon, 0.10%-0.50% silicon, 0.50%-0.80% manganese, 0-0.05% phosphorus, 0-0.03% sulphur, 0-0.50% chromium, 0-0.50% nickel, 0-0.20% molybdenum, 0-0.50% copper, 0-0.01% aluminum, 0-120 ppm nitrogen.

4. A steel wire for tire reinforcement according to claim 3, **characterized in that** said steel wire has a composition comprising 80ppm-100 ppm nitrogen.

5. A steel wire for tire reinforcement according to any one of claims 1-4, **characterized in that** said steel wire has a tensile strength TS satisfying: 4600-2000xd≤TS≤5000-2000xd MPa.

6. A steel wire for tire reinforcement according to any one of claims 1-5, **characterized in that** said steel wire has a carbon content of 0.85%-0.95%.

7. A steel wire for tire reinforcement according to any one of claims 1-6, **characterized in that** said steel wire is a monofilament used for tire reinforcement.

8. A steel wire for tire reinforcement according to any one of claims 1-6, **characterized in that** said steel wire has a diameter d in the range of 0.8 mm to 3.0 mm or in the range of 0.15 mm to 0.55 mm.

9. A steel cord for tire reinforcement, **characterized in that** said steel cord comprising two or more steel wires, said steel cord has a cord lay length of 4-40 mm, at least one of the steel wires is according to any one of claims 1-8.

10. A steel cord for tire reinforcement according to claim 9, **characterized in that** said steel cord has a construction of 1x2, 1x3, 1x4, 1x5, 1x6, 1x7, 1x8, 1+3, 1+4, 1+5, 1+6, 2+5, 2+5cc, 2+6, 2+7, 2+7cc, 2+7+1, 2+8, 3+6, 3+8, 3+8cc, 3+9, 3+9+1, 3+9cc, 3+9+1cc, 4+9, 4+10, 1+3+8, 1+4+8cc, 1+4+9, 1+5+10, 1+5+10cc, 1+6+11, 1+6+12, 1+6+12cc, 2+5+10, 2+6+12, 3+8+13, 3+8+13+1, 3+9+15, 3+9+15+1, 4+10+16, 4+10+16+1, 2+1, 2+2, 2+3, 2+4, 3+2, 3+3, 3+4, 4+3, 4+6; 3x2, 3x3, 3x4, 3x6, 3x7, 4x2, 4x3, 4x4, 4x7, 7x7, 7x7+1, 7x(3+9), 7x(3+9)+1, 7x(1+18), 7x(1+18)+1, 7x(3+9+15), 7x(3+9+15)+1.

11. A steel cord for tire reinforcement according to claim 9, **characterized in that** the steel cord comprises a wrapping steel wire, the wrapping steel wire contains less than 50% recycled steel, while each of the remaining steel wires of the steel cord is as claimed in any one of claims 1 or 8.

12. A tire comprises at least one belt layer, at least one carcass layer, at least one tread layer and a pair of bead portions, where the belt layer, the carcass layer, the tread layer and/or the bead portions comprises the steel wires as claimed in any one of claims 1 to 8 and/or the steel cords as claimed in any one of claims 9 to 11.
